# EUROPÄISCHE PATENTSCHRIFT

(11) **EP 1 052 441 B1**
(45) Veröffentlichungstag und Bekanntmachung des Hinweises auf die Patenterteilung: **03.03.2004**
(21) Anmeldenummer: 00109216.2
(22) Anmeldetag: 28.04.2000
(51) Int. Cl.: F16K 31/06

(54) **Magnetisch betätigbares Ventil**
Magnetic valve
Soupape électromagnétique

(30) Priorität: 14.05.1999 DE 19922414
(43) Veröffentlichungstag der Anmeldung: 15.11.2000
(73) Patentinhaber: Deutsches Zentrum für Luft- und Raumfahrt e.V., 53175 Bonn (DE)
(72) Erfinder: Neuhaus, Dietmar, Dr., 40571 Düsseldorf (DE)
(74) Vertreter: Selting, Günther, Dipl.-Ing.

(56) Entgegenhaltungen:
- DE-A- 3 028 938
- FR-A- 1 298 519
- US-A- 2 576 168
- US-A- 5 345 968

## Beschreibung

Die Erfindung betrifft ein magnetisch betätigbares Ventil für Fluide.

Bekannt sind magnetisch betätigbare Ventile, bei denen ein Verschlußkörper von einer Feder in einen Ventilsitz gedrückt wird und diesen verschließt. Zum Öffnen eines derartigen Ventiles wird der Verschlußkörper von einem Magnetfeld von dem Ventilsitz fortbewegt, so daß das Medium durch das Ventil strömen kann. Derartige Ventile haben den Nachteil, daß bei der Betätigung des Ventils auch die Wirkung der Federkraft überwunden werden muß, was den Aufwand bei der Erzeugung des Magnetfeldes erhöht. Darüber hinaus ist die Federvorrichtung aufwendig und anfällig.

Weiterhin ist aus DE 198 00 257 ein schnellschaltendes Kugelventil bekannt, bei dem eine einen Ventilsitz bedeckende Kugel bei einer schnellen Bewegung des Ventilsitzes mittels eines Stößels von dem Ventilsitz fortbewegt wird.

Ein magnetisch betätigbares Ventil, von dem der Oberbegriff des Patentanspruchs 1 ausgeht, ist bekannt aus DE 37 25 810. Hierbei ist der mit dem Ventilsitz zusammenwirkende Verschlusskörper an einem linear bewegbaren Anker angebracht, der durch Erregen einer Magnetspule bewegt werden kann. Die Bewegung des Verschlusskörpers erfolgt rechtwinklig zu der Ebene des Ventilsitzes.

In DE 34 18 654 C2 ist ein Elektromagnet für ein Ventil beschrieben, bei dem ein ebenfalls linear bewegbarer Anker als Betätigungselement vorgesehen ist. Die Bewegung des Ankers erfolgt durch ein von einer Spule erzeugtes Magnetfeld, welches an einer eingebauten Unstetigkeitsstelle in den Weg des Ankers hinein deformiert wird.

US-A-2,576,168 beschreibt ein magnetisches Absperrventil, das einen in einem Ventilgehäuse bewegbaren Verschlusskörper enthält. Parallel zu dem Ventilgehäuse verläuft ein Führungsgehäuse, in dem ein Permanentmagnet verschiebbar ist. Durch Verschieben des Permanentmagneten kann der Verschlusskörper in einen von dem Ventilgehäuse seitlich abzweigenden Raum hineinbewegt werden, so dass er den durch das Ventilgehäuse hindurchführenden Kanal freigibt. Wenn hierbei die Wand des Kanals aus magnetisierbarem Material bestehen würde, würde sie das Innere des Kanals von dem Magnetfeld des externen Magneten abschirmen. Sowohl das Führungsgehäuse des Magneten als auch der Kanal müssen aus amagnetischem Material bestehen.

FR-A-1,298,519 beschreibt ein magnetisch betätigbares Ventil mit einem Ventilgehäuse, in dem ein Verschlusskörper bewegbar ist. Um das Verschlussgehäuse herum ist ein Elektromagnet angeordnet. Die Wand des Verschlussgehäuses enthält eine Platte aus Stahl, die das Magnetfeld derart verformt, dass die Ventilkugel nach dem Öffnen des Ventils eine definierte Position einnimmt. Auch diese Vorrichtung dürfte nur funktionieren, wenn das Ventilgehäuse aus einem für Magnetfelder durchlässigen Material besteht.

Der Erfindung liegt die Aufgabe zugrunde, ein magnetisch betätigbares Ventil mit einfachem Aufbau zu schaffen.

Dieser Aufgabe wird erfindungsgemäß mit den Merkmalen des Patentanspruchs 1 gelöst.

Das magnetisch betätigbare Ventil gemäß der Erfindung hat einen Innenraum, der durch mindestens eine aus magnetisierbarem Material bestehende Wand eines Ventilgehäuses begrenzt ist, wobei der Innenraum über eine Zuström- und eine Abströmöffnung von einem zu regulierenden Fluid durchströmt wird. In dem Innenraum befindet sich ein Ventilsitz, der mit einem magnetisch bewegbaren Verschlusskörper verschließbar ist. Eine Magnetvorrichtung ist vorgesehen, die in der magnetisierbaren Wand ein parallel zu der Wandfläche verlaufendes Magnetfeld erzeugt. An einer das Magnetfeld deformierenden Unstetigkeitsstelle der magnetisierbaren Wand wird das Magnetfeld derart verformt, daß es aus der Wand hervorquillt und sich in den Innenraum hinein erstreckt, wo es den Verschlußkörper durch magnetische Anziehungs- oder Abstoßungskräfte bewegt.

Die Unstetigkeitsstelle wirkt wie ein fokussierendes Umlenkelement für das Magnetfeld. Zunächst verläuft das Magnetfeld parallel zu der Wandfläche innerhalb der Wand. An der Unstetigkeitsstelle wird ein konzentriertes Magnetfeld gebildet, welches sich aus der Wand heraus in den Innenraum erstreckt, um den Verschlußkörper zu bewegen. Da die Magnetfeldlinien nur in einem sehr kurzen Abschnitt durch den mit einem vergleichsweise wenig permeablen Material gefüllten Innenraum verlaufen, ansonsten der magnetische Kreis jedoch in dem hochpermeablen Material der magnetisierbaren Wand geschlossen ist, wird nur wenig Energie benötigt, um das Magnetfeld zu erzeugen.

Die Unstetigkeitsstelle ist von einem Bereich gebildet, der eine geringere magnetische Suszeptibilität, d.h. magnetische Polarisierbarkeit, als die übrigen Bereiche der magnetisierbaren Wand aufweist. Bei der Auslegung der Unstetigkeitsstelle ist gegebenenfalls die magnetische Suszeptibilität des Fluids zu berücksichtigen.

Das in der magnetisierbaren Wand verlaufende Magnetfeld ist sehr einfach zu erzeugen. Beispielsweise kann die Magnetvorrichtung eine die magnetisierbare Wand umgebende Spule aufweisen, welche ein Magnetfeld in der magnetisierbaren Wand und im Bereich der Unstetigkeitsstelle auch im Innenraum erzeugt.

Vorzugsweise ist die Unstetigkeitsstelle eine an dem Umfang des Innenraums verlaufende Nut. Dies kann z.B. eine umlaufende Nut mit variierendem Querschnitt oder eine nur bereichsweise ausgebildete Nut sein. Durch die Querschnittsänderung bzw. die bereichsweise Ausbildung der Nut wird erreicht, daß die Richtung und/oder der Betrag des Magnetfeldes verändert wird, so daß in einem Bereich eine größere magnetische Kraft auf den Verschlußkörper wirkt als in einem anderen Bereich, was in einer Bewegung. des Verschlußkörpers resultiert. Statt einer vollständig umlaufenden oder bereichsweise verlaufenden Nut können auch einzelne Aussparungen vorgesehen sein.

Die Veränderung der Nuttiefe bewirkt eine Änderung des Betrages des in den Innenraum hervorquellenden Magnetfeldes. Je tiefer die Nut ausgebildet ist, desto höher ist der Betrag des Magnetfeldes und damit die auf den Verschlußkörper wirkende Kraft. Eine Änderung der Nutbreite bewirkt eine Änderung der Magnetfeldgeometrie, d.h. einen anderen Verlauf der Magnetfeldvektoren. Je schmaler die Nut ausgebildet ist, desto inhomogener ist das in den Innenraum hinein reichende magnetische Feld.

Vorzugsweise ist ein den Verschlußkörper in Schließstellung auf dem Ventilsitz zentrierender Haltemagnet vorgesehen, der bewirkt, daß das Ventil verschlossen bleibt, solange die Magnetvorrichtung kein Magnetfeld in der magnetisierbaren Wand erzeugt. Der Verschlußkörper und der Innenraum können derart bemessen sein, daß der Verschlußkörper den Innenraum nahezu ausfüllt, wodurch bewirkt wird, daß der zu bewegende Verschlußkörper schon alleine durch die Fluidströmung auf dem Ventilsitz zentriert wird. Aufwendige Federmechanismen zum Schließen des Ventils werden dann nicht benötigt.

Das Ventil kann auch mit einer negativen Schaltcharakteristik betrieben werden, d.h. daß das Ventil zunächst offen ist und erst nach Erzeugen eines Magnetfeldes geschlossen wird. Dazu enthält die magnetisierbare Wand einen Permanentmagneten, der, wie zuvor anhand der Magnetvorrichtung beschrieben, ein Magnetfeld in der magnetisierbaren Wand erzeugt und den Verschlußkörper vom Ventilsitz wegbewegt. Ist die Magnetvorrichtung aktiviert, erzeugt sie ein zu dem Feld des Permanentmagneten magnetisches Gegenfeld, wobei die beiden Felder sich aufheben, so daß keine magnetische Kraft auf den Verschlußkörper wirkt und dieser von dem strömenden Fluid und/oder einem Haltemagneten in die Schließposition auf den Ventilsitz zurückbewegt wird.

Es kann ein zweiter Ventilsitz vorgesehen sein, wobei sich der Verschlußkörper zwischen den beiden Ventilsitzen befindet. Ein derartiges Ventil kann in zwei Richtungen betrieben werden. Es hängt dann vom Druckverlauf ab, welcher der beiden Ventilsitze von dem Verschlußkörper bedeckt wird.

In dem Innenraum kann ein den Verschlußkörper haltendes Fanggitter vorgesehen sein. Vorzugsweise befindet sich der Verschlußkörper zwischen dem Ventilsitz und dem Fanggitter, so daß sichergestellt ist, daß der Verschlußkörper in dem Innenraum verbleibt, auch wenn kein Fluid auf den Verschlußkörper wirkt.

Die Bewegung des Verschlußkörpers mittels eines Magnetfeldes bedingt, daß das Ventil entweder vollständig geöffnet oder geschlossen ist, da die auf den Verschlußkörper wirkende magnetische Anziehungskraft ansteigt, wenn der Verschlußkörper sich auf die Unstetigkeitsstelle zu bewegt. Der Verschlußkörper bewegt sich demnach, bis er die magnetische Wand erreicht. Das Ventil kann also nur offen oder geschlossen sein. Um ein stufenweises Öffnen zu ermöglichen, können in dem Ventilgehäuse mehrere parallel angeordnete Innenräume vorgesehen sein, wobei jedem Innenraum eine unterschiedliche Unstetigkeitsstelle zugeordnet ist, beispielsweise durch eine umlaufende Nut mit variierendem Querschnitt, und wobei die Magnetvorrichtung Magnetfelder unterschiedlicher Stärke erzeugen kann, so daß, abhängig von der Stärke des Magnetfeldes, die Verschlußkörper in den Innenräumen selektiv bewegbar sind.

Im folgenden werden Ausführungsbeispiele der Erfindung anhand der Zeichnungen näher erläutert.

Es zeigen:
- Fig. 1: ein erstes Ausführungsbeispiel des magnetisch betätigbaren Ventils im Schließzustand,
- Fig. 2: das Ventil gemäß dem ersten Ausführungsbeispiel in geöffnetem Zustand,
- Fig. 3: den Verlauf den magnetischen Feldes an der Unstetigkeitsstelle der magnetisierbaren Wand,
- Fig. 4: ein zweites Ausführungsbeispiel des magnetisch betätigbaren Ventils, bei dem der Verschlußkörper mit einem Haltemagneten auf dem Ventilsitz zentriert wird,
- Fig. 5: ein Ventil nach einem dritten Ausführungsbeispiel, das eine negative Schaltcharakteristik hat, und
- Fig. 6: ein viertes Ausführungsbeispiel des Ventils, das stufenweise geöffnet werden kann.

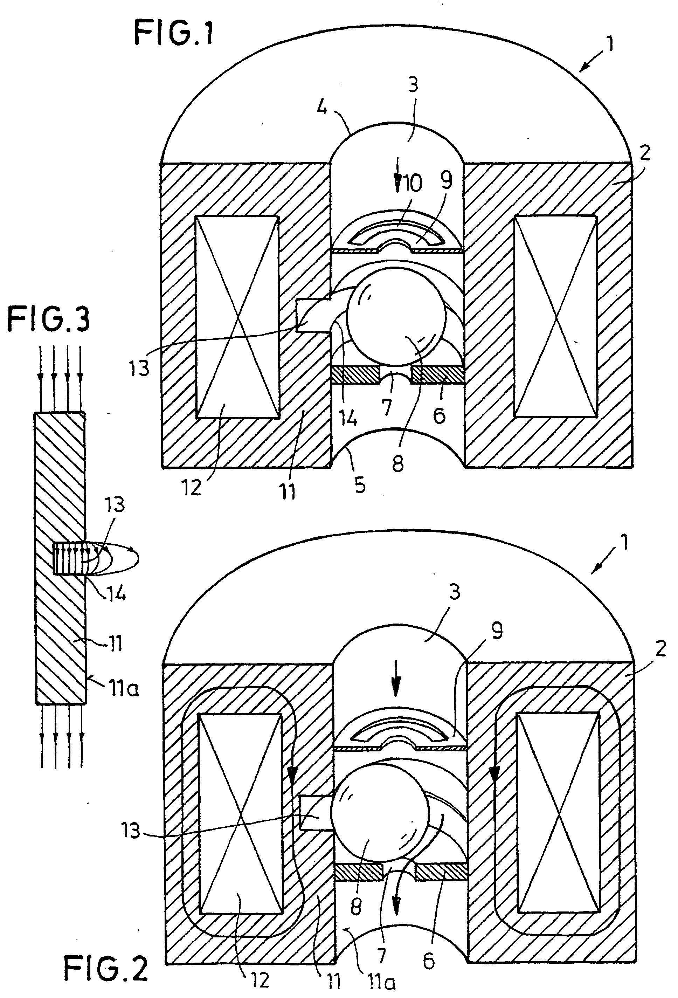

Das in den Fign. 1 und 2 gezeigte magnetisch betätigbare Ventil 1 gemäß einem ersten Ausführungsbeispiel der Erfindung hat ein zylinderrohrförmiges Ventilgehäuse 2 mit einem Innenraum 3. Die Stirnseiten des Ventilgehäuses 2 bilden eine Zuströmöffnung 4 und eine Abströmöffnung 5 für den Innenraum 3, durch den das zu regulierende Fluid, wie beispielsweise eine Flüssigkeit oder ein Gas, strömt. An den Stirnseiten des Ventilgehäuses 2 kann das Ventil 1 in ein Leitungssystem eingesetzt werden.

In dem Innenraum 3 befindet sich ein scheibenförmiger, den Innenraum 3 vollständig abschließender Ventilsitz 6 mit einer zentralen Ventilöffnung 7. In dem in Fig. 1 dargestellten Schließzustand befindet sich ein Verschlußkörper 8, hier eine Kugel, zentriert auf dem Ventilsitz 6, so daß die Ventilöffnung 7 vollständig verschlossen ist. Das in Pfeilrichtung, also in Fig. 1 von oben nach unten drückende Fluid hält den Verschlußkörper 8 auf dem Ventilsitz 6 zentriert. Ein an der dem Ventilsitz 6 gegenüberliegenden Seite des Verschlußkörpers 8 angeordnetes Fanggitter 9 dient dazu, daß der Verschlußkörper 8 ständig zwischen dem Ventilsitz 6 und dem Fanggitter 9 gehalten wird. Auch wenn das Fluid keinen Druck auf den Verschlußkörper 8 ausübt, oder eine Strömungsumkehr stattfindet. In dem Fanggitter 9 sind Öffnungen 10 vorgesehen, um den Strömungswiderstand für das Fluid zu verringern. Diese Öffnungen 10 können bei einer Strömungsumkehr aber auch dazu dienen, daß das Fluid das Ventil 1 in umgekehrter Richtung passieren kann.

Das Ventilgehäuse 2 besteht vollständig aus magnetisierbarem Material. Wesentlich für die Erfindung ist, daß zumindest eine den Innenraum 3 begrenzende Wand 11 des Gehäuses 2 aus einem magnetisierbaren Material besteht. Eine Magnetvorrichtung in Form einer um die Wand 11 gewickelten Spule 12 ist vorgesehen, die bei Stromdurchfluß ein magnetisches Feld erzeugt, das durch das Ventilgehäuse 2 und auch durch die Wand 11 verläuft (s. Pfeile in Fig. 2). Das magnetische Feld wird von dem Ventilgehäuse 2 geführt und hat kein Bestreben, dieses zu verlassen. Im Bereich der magnetisierbaren Wand 11 verläuft das magnetische Feld parallel zu der Wandfläche 11a und damit senkrecht zu dem Ventilsitz 6.

In der Wand 11 ist eine um den Innenraum 3 verlaufende und zu diesem offene Nut 13 ausgebildet. Die Nut 13 hat eine variierende Tiefe; der in den Fign. 1 und 2 rechts dargestellte Anfangsbereich hat eine Tiefe von Null, während in dem gegenüberliegenden, hier links dargestellten Bereich die Maximaltiefe erreicht wird.

Anhand von Fig. 3 wird erläutert, wie die Nut 13 als Unstetigkeitsbereich für das in der Wand 11 verlaufende Magnetfeld wirkt. Fig. 3 zeigt einen Ausschnitt der Wand 11 aus Fig. 2. Das magnetisierbare Material der Wand 11 hat eine gewisse magnetische Suszeptibilität, d.h. es kann durch ein Magnetfeld magnetisch polarisiert werden. Im Bereich 13 ist Material mit geringerer magnetischer Suszeptibilität angeordnet. Hier befindet sich Luft in der Nut 13, deren magnetische Suszeptibilität fast gleich Eins ist. Die Nut kann zur Verbesserung der Strömungseigenschaften in dem Innenraum 3 mit einem Material mit geringer magnetischer Suszeptibilität gefüllt werden.

Die Flächen und Kanten der Nut 13 bilden Übergangsbereiche für das Magnetfeld, in denen es zu inhomogenen Feldverläufen kommt. Magnetfeldlinien sind bestrebt, senkrecht aus einer Fläche hervorzutreten, was im Bereich der dem Innenraum 3 zugewandten Kanten 14 der Nut 13 dazu führt, daß ein inhomogenes Magnetfeld aus der Nut 13 hervorquillt und damit in den Innenraum 3 hineinreicht. Einige der Feldlinien des Magnetfeldes verlaufen' in Richtung des Verschlußkörpers 8 und üben eine magnetische Kraft auf diesen aus. Je nach Orientierung des Magnetfeldes und den magnetischen Eigenschaften des Ventilkörpers kann dies eine Anziehungs- oder Abstoßungskraft sein.

Wie in Fig. 2 dargestellt ist, bewirkt der sich in den Innenraum 3 erstreckende Teil des Magnetfeldes, daß der Verschlußkörper 8 entlang des Ventilsitzes 6 bewegt wird, so daß die Ventilöffnung 7 freigegeben wird, woraufhin das Fluid das Ventil 1 passieren kann.

Wird das Magnetfeld abgeschaltet, um das Ventil 1 wieder zu schließen, trägt das Fluid den Verschlußkörper 8 wieder in die Mitte des Ventilsitzes 6, so daß die Ventilöffnung 7 verschlossen wird.

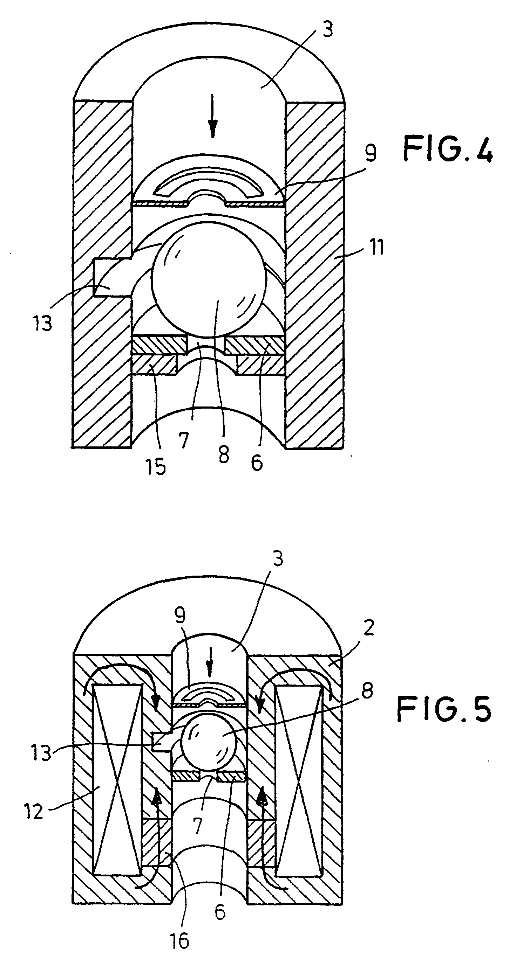

In Fig. 4 ist eine Detaildarstellung eines zweiten Ausführungsbeispiels gezeigt. Wie auch in dem ersten Ausführungsbeispiel umhüllt die Wand 11 aus magnetisierbarem Material einen Innenraum 3, der einen Ventilsitz 6 und einen im Schließzustand die Ventilöffnung 7 bedeckenden Verschlußkörper 8 enthält. Die Wand 11 weist einen Unstetigkeitsbereich in Form einer Nut 13 auf, die bewirkt, daß ein in der Wand 11 verlaufendes Magnetfeld in den Innenraum 3 hinein umgelenkt wird, um den Verschlußkörper 8 von der Ventilöffnung 7 fortzubewegen.

Um den Verschlußkörper 8 auch dann auf dem Ventilsitz 6 zentriert zu halten, wenn das Fluid keinen Druck auf den Verschlußkörper 8 ausübt, befindet sich ein an der dem Verschlußkörper 8 gegenüberliegenden Seite des Ventilsitzes 6 angeordneter Haltemagnet 15. Die magnetische Kraft des Haltemagneten 15 ist im Vergleich zu dem aus der Nut 13 hervorquellenden Magnetfeld relativ schwach, so daß der Verschlußkörper 8 problemlos von dem in Fig. 4 gezeigten Schließzustand in den Öffnungszustand des Ventils bewegt werden kann, wenn die Magnetvorrichtung 12 ein Magnetfeld erzeugt.

Das in Fig. 5 gezeigte dritte Ausführungsbeispiel des Ventils hat eine negative Schaltcharakteristik, d.h. daß das Ventil offen ist, wenn kein Strom an die Spule 12 angelegt wird, um ein Magnetfeld zu erzeugen. Dies wird dadurch erreicht, daß ein ringförmiger Permanentmagnet 16 in die Wand 11 des Gehäuses 2 eingesetzt ist, wobei der Permanentmagnet 16 ein dauerhaftes Magnetfeld (aufwärts zeigende Pfeile) erzeugt, wodurch der Verschlußkörper 8 von der Ventilöffnung 7 fortbewegt wird.

In Fig. 5 ist das Ventil im Schließzustand gezeigt. Geschlossen wird das Ventil dadurch, daß ein Strom an die Spule 12 angelegt wird, welche derart gewickelt ist, daß sie ein Gegenfeld (abwärts gerichtete Pfeile) zu dem Magnetfeld des Permanentmagneten 16 erzeugt, so daß sich das in der Wand 11 verlaufende Magnetfeld aufhebt und auch keine auf den Verschlußkörper 8 wirkenden Magnetfeldlinien aus der Nut 13 in den Innenraum 3 eintreten können. Bei fehlender magnetischer Wirkung wird der Verschlußkörper 8 von der Strömung des Fluids wieder in die Mitte des Ventilsitzes 6 bewegt, so daß das Ventil schließt.

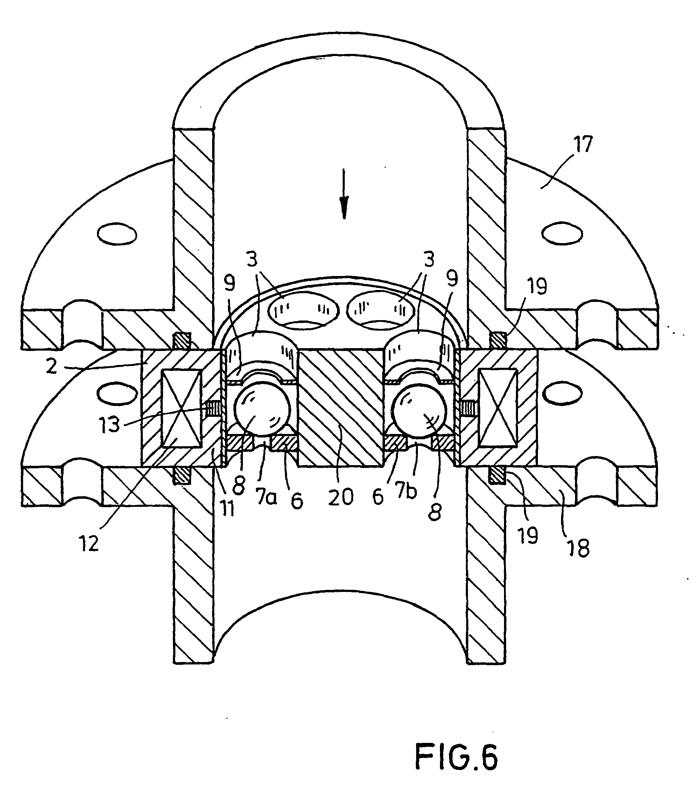

In Fig. 6 ist ein viertes Ausführungsbeispiel der Erfindung gezeigt. Das Ventil ist zwischen zwei Rohrflanschen 17,18 angeordnet und mit zwei Dichtringen 19 abgedichtet. Das Ventil kann auf einfache Art und Weise in eine Leitung eingesetzt werden.

In dem Ventilgehäuse 2 sind mehrere parallel angeordnete Innenräume 3 ausgebildet. In jedem Innenraum 3 befindet sich ein Ventilsitz 6 mit einer Ventilöffnung 7 und einem die Ventilöffnung 7 im Schließzustand bedeckenden Verschlußkörper 8 sowie ein Fanggitter 9, das den Verschlußkörper 8 bei Strömungsumkehr derart hält, daß das Ventil für das in umgekehrter Richtung strömende Fluid geschlossen ist.

Die Innenräume 3 sind in einem Einsatzkörper 20 angeordnet, der an der magnetisierbaren Wand 11 des Ventilgehäuses 2 befestigt ist. Die magnetisierbare Wand 11 hat wiederum einen Unstetigkeitsbereich, hier in Form einer umlaufenden Nut 13 von gleichbleibender Tiefe, die mit Materialien unterschiedlicher magnetischer Suszeptibilität gefüllt ist. So ist jedem Innenraum 3 ein Bereich der Nut 13 mit Material mit verschiedener magnetischer Suszeptibilität zugeordnet. Die verschiedenen magnetischen Suszeptibilitäten bewirken, daß zum Bewegen der Verschlußkörper 8 für jeden Verschlußkörper eine unterschiedliche Mindestmagnetfeldstärke vorhanden sein muß. Für das stufenweise Öffnen des Ventils bedeutet dies, daß in der auf alle Verschlußkörper 8 wirkenden Spule 12 die Höhe des zugeführten Stromes, und damit die Stärke des erzeugten Magnetfeldes, in Abhängigkeit der zu bewegenden Verschlußkörper 8 gewählt wird. Bei einem ersten relativ niedrigen Stromniveau wird lediglich ein Verschlußkörper 8 bewegt, und zwar der Verschlußkörper 8, in dessen Bereich der Unterschied der magnetischen Suszeptibilitäten der Wand 11 und des Nutmaterials am größten ist. Bei einem zweiten, nächsthöheren Stromniveau wird zusätzlich zu dem ersten Verschlußkörper ein zweiter Verschlußkörper bewegt, so daß der Durchsatz des Fluids in der Leitung schrittweise erhöht oder verringert werden kann.

Dadurch, daß jedem Verschlußkörper 8 eine unterschiedliche Unstetigkeitsstelle zugeordnet ist, kann durch Variation des der Spule 12 zugeführten Stromes ein schrittweises Öffnen bzw. Schließen des Ventils erzielt werden. Stattdessen oder auch zusätzlich ist es möglich, die Verschlußkörper unterschiedlich zu gestalten, z.B. in voneinander abweichender Form, Gewicht oder magnetischer Eigenschaft. Es ist auch möglich, den Durchmesser der Ventilöffnungen 7 zu verändern. In Fig. 6 ist links eine Ventilöffnung 7a mit kleinerem Durchmesser gezeigt, während rechts eine größere Ventilöffnung 7b dargestellt ist. Bei der größeren Ventilöffnung 7b wird auch eine größere magnetische Kraft benötigt, um den Verschlußkörper 8 von der Ventilöffnung 7b fortzubewegen, da der Verschlußkörper 8 aufgrund der größeren Fläche der Ventilöffnung 7b mit einer größeren Kraft in diese gedrückt wird.

## Patentansprüche

1. Magnetisch betätigbares Ventil mit einem in einem Ventilgehäuse (2) vorgesehenen, durch mindestens eine aus magnetisierbarem Material bestehende Wand (11) begrenzten Innenraum (3), der eine Zuströmöffnung (4) und eine Abströmöffnung (5) aufweist und einen Ventilsitz (6) enthält, der mit einem magnetisch bewegbaren Verschlußkörper (8) verschließbar ist, und mit einer Magnetvorrichtung (12), die in der magnetisierbaren Wand (11) ein zur Wandfläche (11a) paralleles Magnetfeld erzeugt,
**dadurch gekennzeichnet,**
**dass** der Verschlußkörper (8) in dem Innenraum (3) parallel zum Ventilsitz (6) bewegbar ist und dass die magnetisierbare Wand (11) mindestens eine das Magnetfeld deformierende Unstetigkeitsstelle (13) aufweist, an der das Magnetfeld eine parallel zum Ventilsitz (6) gerichtete Kraft auf den Verschlußkörper (8) ausübt..

2. Ventil nach Anspruch 1, **dadurch gekennzeichnet, daß** die Unstetigkeitsstelle (13) eine an dem Umfang des Innenraums (3) verlaufende Nut mit umfangsmäßig variierender Nuttiefe ist.

3. Ventil nach Anspruch 1 oder 2, **dadurch gekennzeichnet, daß** der Innenraum (3) zylinderförmig ist und die Magnetvorrichtung (12) eine den Innenraum (3) umgebende Spule aufweist.

4. Ventil nach einem der Ansprüche 1-3, **dadurch gekennzeichnet, dass** der Verschlusskörper (8) eine Kugel ist.

5. Ventil nach einem der Ansprüche 1-4, **dadurch gekennzeichnet, dass** ein den Verschlusskörper (8) auf dem Ventilsitz (6) zentrierender Haltemagnet (15) vorgesehen ist.

6. Ventil nach einem der Ansprüche 1-5, **dadurch gekennzeichnet, dass** die magnetisierbare Wand (11) einen Permanentmagneten (16) enthält, der den Verschlusskörper (8) in den Öffnungszustand bewegt, wobei zum Schließen des Ventils (1) die Magnetvorrichtung (12) ein magnetisches Gegenfeld zu dem Feld des Permanentmagneten (16) erzeugt.

7. Ventil nach einem der Ansprüche 1-6, **dadurch gekennzeichnet, dass** ein zweiter Ventilsitz vorgesehen ist, wobei der Verschlusskörper (8) zwischen den beiden Ventilsitzen angeordnet ist.

8. Ventil nach einem der Ansprüche 1-7, **dadurch gekennzeichnet, dass** in dem Innenraum (3) ein den Verschlusskörper (8) in diesem haltendes Fanggitter (9) vorgesehen ist.

9. Ventil nach einem der Ansprüche 1-8, **dadurch gekennzeichnet, daß** in dem Ventilgehäuse (2) mehrere parallel angeordnete Innenräume (3) vorgesehen sind, wobei jedem Innenraum (3) eine unterschiedliche Unstetigkeitsstelle zugeordnet ist und die Magnetvorrichtung (12) Magnetfelder unterschiedlicher Stärke erzeugen kann, so daß abhängig von der Stärke des Magnetfeldes die Verschlußkörper (8) in den Innenräumen (3) selektiv bewegbar sind.

## Claims

1. Magnetically operatable valve with an inner volume (3) provided in a valve housing (2) and defined by at least one wall (11) of magnetizable material, said inner volume having an inflow opening (4) and an outflow opening (5) as well as a valve seat (6) adapted to be closed by a magnetically movable closing member (8), and with a magnetic device (12) that generates a magnetic field in the magnetizable wall (11) that is parallel to the wall surface (11a),
**characterized in**
**that** the closing member (8) is movable within the inner volume (3) parallel to the valve seat (6), and that the magnetizable wall (11) includes at least one point of discontinuity (13) deforming the magnetic field where the magnetic field exerts a force on the closing member (8) that is directed parallel to the valve seat (6).

2. The valve of claim 1, wherein the point of discontinuity (13) is a groove extending along the circumference of the inner volume (3), the depth of the groove varying along the circumference.

3. the valve of claim 1 or 2, wherein the inner volume (3) is cylindrical and the magnetic device (12) comprises a coil surrounding the inner volume (3).

4. The valve of one of claims 1-3, wherein the closing member (8) is a ball.

5. The valve of one of claims 1-4, wherein a retaining magnet (15) is provided for centring the closing member (8) on the valve seat (6).

6. The valve of one of claims 1-5, wherein the magnetizable wall (11) includes a permanent magnet (16) that moves the closing member (8) into the open position, the magnetic device (12), for closing the valve (1), generating a magnetic counter field to the field of the permanent magnet (16).

7. The valve of one of claims 1-6, wherein a second valve seat is provided, the closing member (8) being arranged between the two valve seats.

8. The valve of one of claims 1-7, wherein an intercepting grid (9) is provided in the inner volume (3) for retaining the closing member (8) therein.

9. The valve of one of claims 1-8, wherein a plurality of parallel inner volumes (3) are provided in the valve housing (2), a different point of discontinuity being associated with each inner volume (3), and the magnetic device (12) is adapted to generate magnetic fields of different magnitudes so that, depending on the magnitude of the magnetic field, the closing members (8) may be moved selectively in the inner volumes (3).

## Revendications

1. Soupape à actionnement électromagnétique munie d'un espace intérieur (3) délimité par au moins une paroi (11) constituée d'un matériau magnétisable et prévu dans un boîtier de soupape (2), ledit espace intérieur présentant un orifice d'amenée (4) et un orifice d'écoulement (5) et contenant un siège de soupape (6) pouvant être fermé par un corps de fermeture (8) à déplacement magnétique, et munie d'un dispositif magnétique (12) qui crée, dans la paroi magnétisable (11), un champ magnétique parallèle à la surface de la paroi (11a), **caractérisée en ce que** le corps de fermeture (8) est mobile parallèlement au siège de soupape (6) dans l'espace intérieur (3), et **en ce que** la paroi magnétisable (11) présente au moins un point de discontinuité (13) déformant le champ magnétique, auquel point le champ magnétique exerce une force, dirigée parallèlement au siège de soupape (6), sur le corps de fermeture (8).

2. Soupape selon la revendication 1, **caractérisée en ce que** le point de discontinuité (13) est une rainure passant sur le pourtour de l'espace intérieur (3) avec une profondeur de rainure variant le long du pourtour.

3. Soupape selon la revendication 1 ou 2, **caractérisée en ce que** l'espace intérieur (3) est de forme cylindrique et **en ce que** le dispositif magnétique (12) comporte une bobine entourant l'espace intérieur (3).

4. Soupape selon l'une quelconque des revendications 1 à 3, **caractérisée en ce que** le corps de fermeture (8) est une sphère.

5. Soupape selon l'une quelconque des revendications 1 à 4, **caractérisée en ce qu'**il est prévu un électroaimant de maintien (15) centrant le corps de fermeture (8) sur le siège de soupape (6).

6. Soupape selon l'une quelconque des revendications 1 à 5, **caractérisée en ce que** la paroi magnétisable (11) contient un aimant permanent (16) qui déplace le corps de fermeture (8) à l'état ouvert, le dispositif magnétique (12) créant un champ magnétique opposé au champ de l'aimant permanent (16) pour fermer la soupape (1).

7. Soupape selon l'une quelconque des revendications 1 à 6, **caractérisée en ce qu'**il est prévu un deuxième siège de soupape, le corps de fermeture (8) étant disposé entre les deux sièges de soupape.

8. Soupape selon l'une quelconque des revendications 1 à 7, **caractérisée en ce qu'**une grille d'arrêt (9) est prévue dans l'espace intérieur (3), qui maintient le corps de fermeture (8) dans celui-ci.

9. Soupape selon l'une quelconque des revendications 1 à 8, **caractérisée en ce que** plusieurs espaces intérieurs (3) disposés parallèlement sont prévus dans le boîtier de soupape (2), un point de discontinuité différent étant associé à chaque espace intérieur (3), et le dispositif magnétique (12) pouvant créer des champs magnétiques de forces différentes, de sorte que les corps de fermeture (8) sont mobiles de manière sélective dans les espaces intérieurs (3) en fonction de la force du champ magnétique.
